**Europäisches Patentamt**

**European Patent Office**

**Office européen des brevets**

(11) Veröffentlichungsnummer: **0 126 837**
**A1**

## EUROPÄISCHE PATENTANMELDUNG

(21) Anmeldenummer: **84100332.0**

(22) Anmeldetag: **13.01.84**

(51) Int. Cl.³: **H 04 N 5/782**

(30) Priorität: **24.01.83 DE 3302211**

(43) Veröffentlichungstag der Anmeldung:
**05.12.84 Patentblatt 84/49**

(84) Benannte Vertragsstaaten:
**AT BE CH DE FR GB IT LI**

(71) Anmelder: **GRUNDIG E.M.V. Elektro-Mechanische Versuchsanstalt Max Grundig**
**Kurgartenstrasse 37**
**D-8510 Fürth(DE)**

(72) Erfinder: **Obremski, Michael**
**Ludwig-Quellen-Strasse 10**
**D-8510 Fuerth/Bayern(DE)**

(54) Verfahren zur Erhöhung der Übersprechdämpfung bei magnetischer Videoaufzeichnung.

(57) Bei der magnetischen Videoaufzeichnung in Schrägspurtechnik wird bei beliebiger Bandgeschwindigkeit bzw. Spurbreite das Kriterium der Zeilendeckung im Spurbild dadurch erreicht, daß bei Aufnahme und Wiedergabe in den Signalweg mit Halbbildfrequenz geschaltete Verzögerungsleitungen eingefügt werden.

FIG.3

EP 0 126 837 A1

Croydon Printing Company Ltd.

VERFAHREN ZUR ERHÖHUNG DER ÜBERSPRECH-
DÄMPFUNG ZWISCHEN BENACHBARTEN SPUREN
BEI MAGNETISCHER VIDEOAUFZEICHNUNG NACH
DEM SCHRÄGSPURVERFAHREN

Beschreibung

Die Erfindung befaßt sich mit einem Verfahren, das die Erreichung der sogenannten Zeilendeckung bei der magnetischen Videoaufzeichnung nach dem Schrägspurverfahren erlaubt, ohne daß die Vorschubgeschwindigkeit des Magnetbandes und die Breite der Videospuren an bestimmte diskrete Werte gebunden ist.

Die Zeilendeckung bei der magnetischen Videoaufzeichnung in parallelen Schrägspuren entsprechend der US-Patentschrift 3 215 772 bedeutet, daß die auf dem Magnetband aufgezeichneten Zeilenimpulse des Videosignals auf Geraden liegen, die senkrecht zu den Videospuren verlaufen. Dadurch wird erreicht, daß beim Übersprechen zwischen benachbarten Spuren die besonders störenden, energiereichen Zeilenimpulse nicht in den Videosignalbereich fallen und somit im wiedergegebenen Bild als Störung nicht sichtbar werden. Außerdem bietet die Zeilendeckung bei Aufzeichnungsverfahren ohne

-2-

Winkelentkopplung zwischen benachbarten Spuren den
zusätzlichen Vorteil, daß die Stehbildwiedergabe
auch bei der Abtastung zweier benachbarter Spuren
möglich ist.

Die Zusammenhänge sind genauer beschrieben in den
Veröffentlichungen
  Grundig Technische Informationen, Nr. 3/1971
                                          S. 928
und
  Grundig Technische Informationen, Nr. 5/6, 1976
                                          S. 830

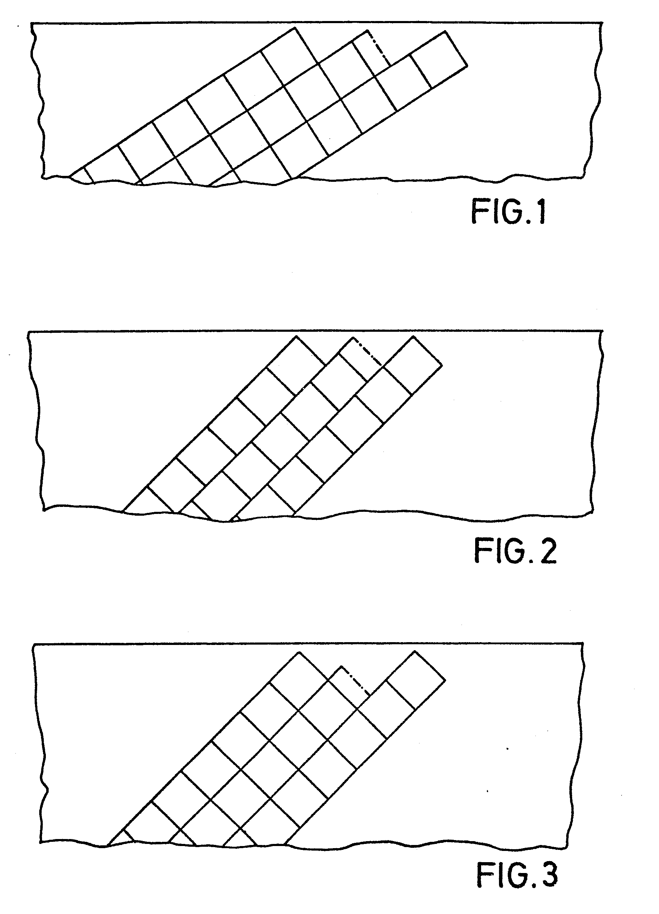

Das Spurbild, das sich bei der Aufzeichnung mit Zeilendeckung ergibt, ist in Figur 1 als Anschnitt am oberen
Rand des Magnetbandes verdeutlicht. Die auf den Spurrändern stehenden senkrechten Linien markieren die
Zeilenimpulse und teilen die Spuren in Abschnitte, die
der Zeilendauer entsprechen. Durchgehend über alle Spuren
liegen die Markierungen für die Zeilenimpulse auf Geraden,
die senkrecht auf den Spuren stehen. Wie bereits erwähnt,
ist dies das Kriterium für die Zeilendeckung. Wegen des
Zeilensprungverfahrens, bei dem das Halbbild aus einem
ganzzahligen Vielfachen der halben Zeilenperiode besteht,
endet der obere Spurrand in einer Spur mit dem Zeilenimpuls und in der nächsten Spur zwischen zwei Zeilenimpulsen.

-3-

Je nach Wahl der Geschwindigkeit des Magnetbandes verlaufen die Spuren bei konstanter Kopfraddrehzahl mehr oder weniger geneigt. Dies hat zur Folge, daß zur Erreichung der Zeilendeckung der Versatz von Spur zur Spur mit Rücksicht auf das Zeilensprungverhalten immer ein ganzzahliges Vielfaches der halben Zeilenperiode beträgt. In Figur 1 ist der Versatz beispielsweise drei halbe Zeilenperioden. Bei der Darstellung in Figur 1 wird vorausgesetzt, daß die Aufzeichnung der Videospuren ohne Zwischenräume dicht nebeneinander erfolgt. Um bei dieser rasenfreien Dichtspeichertechnik Übersprechen zwischen den Spuren zu vermeiden, wird für das Luminanzsignal das bekannte Verfahren der Winkelentkopplung verwendet, das heißt, die Spalte der beiden Videoköpfe, die alternativ die aufeinanderfolgenden Spuren schreiben und lesen, sind gegeneinander geneigt, so daß bei der Wiedergabe das infolge eines Spurfehlers entstehende Übersprechen stark reduziert wird. Einzelheiten sind z. B. aus

Grundig Technische Informationen 3/1978, S. 175

zu entnehmen. Diese Übersprechdämpfung ist für den ohnehin von Spur zu Spur stark korrelierten Bildinhalt ausreichend. Wegen der Zeilendeckung besteht beim Zeilenimpuls völlige Korrelation, so daß jedes Übersprechen unwirksam bleibt.

- 4 -

Zur Vermeidung des Übersprechens bei den frequenzumgesetzten Chrominanzsignalen, für die wegen der
niedrigen Frequenzlage bzw. der größeren Wellenlängen
auf dem Band die Winkelentkopplung nur vermindert
wirksam ist, werden Phasenumschaltverfahren benutzt
wie z. B. in den
     Grundig Technischen Informationen 3/1980, S. 155
beschrieben.


Soll zur Erhöhung der Aufzeichnungsdichte bzw. der
Spieldauer für eine bestimmte Bandlänge die Geschwindigkeit des Magnetbandes reduziert und damit die Spurbreite
verringert werden, dann ist dies bei gleichzeitiger
Aufrechterhaltung der Zeilendeckung nur möglich, wenn
die Änderung in bestimmten, diskreten Schritten erfolgt.
Werden diese diskreten Schritte nicht eingehalten, dann
kann sich beispielsweise ein Spurbild nach Figur 2 ergeben. Es besteht keine Zeilendeckung mehr, das heißt,
die Aufzeichnung in benachbarten Spuren ist nicht mehr
korreliert, insbesondere liegt die Aufzeichnung des
energiereichen Zeilenimpulses in Relation zur Nachbarspur innerhalb des Videosignals und kann dort trotz
Winkelentkopplung der Videoköpfe starke Störungen verursachen, die im wiedergegebenen Bild sichtbar sind.


Aufgabe der Erfindung ist es, das Übersprechen der Zeilenimpulse in die Nachbarspur auch bei frei gewählter Geschwindigkeit des Magnetbandes und der Spurbreite zu
vermeiden. Hierzu wird das Videosignal bei der Aufzeichnung

-5-

alternierend von Spur zu Spur bzw. Halbbild zu Halbbild derart über geschaltete Verzögerungsleitungen
geführt, daß die Geometrie der Aufzeichnungsspuren
auf dem Magnetband das Kriterium der Zeilendeckung
aufweist und daß bei der Wiedergabe des Signals der
Zeitversatz durch umgekehrt wirkende alternierend von Spur zu
Spur bzw. Halbbild zu Halbbild geschaltete Verzögerungsleitungen wieder aufgehoben wird.

Durch die geschaltete Verzögerung wird erreicht, daß
wie in Figur 3 dargestellt, das Kriterium der Zeilendeckung im Spurbild wieder erfüllt und damit das
störende Übersprechen beseitigt ist.

Das gleiche Ergebnis läßt sich auch dadurch erreichen,
daß einer der beiden Videoköpfe auf dem Kopfrad gegenüber dem Sollwert von 180$^{o}$ um einen bestimmten Winkel
versetzt wird, wie z. B. in
Grundig Technische Informationen 3/1977, S. 118
beschrieben. Dieses Verfahren weist jedoch den Nachteil
auf, daß die Herstellung und Justierung des Kopfrades
beträchtlich aufwendiger und komplizierter wird.

Beim erfindungsgemäßen Verfahren dagegen, wird die Aufgabenstellung durch leicht beherrschbare elektronische
Verzögerungsleitungen gelöst, die zudem noch den Vorteil
bringen, daß die Anpassung an unterschiedliche Bandgeschwindigkeiten bzw. Spurbreiten durch Veränderung der
Verzögerungszeiten auf einfache Weise möglich ist.

-1-

VERFAHREN ZUR ERHÖHUNG DER ÜBERSPRECH-
DÄMPFUNG ZWISCHEN BENACHBARTEN SPUREN
BEI MAGNETISCHER VIDEOAUFZEICHNUNG NACH
DEM SCHRÄGSPURVERFAHREN

## Patentansprüche

1. Verfahren zur Erhöhung der Übersprechdämpfung zwischen benachbarten Spuren bei magnetischer Videoaufzeichnung nach dem Schrägspurverfahren durch Einhaltung des Kriteriums der Zeilendeckung bei beliebiger Geschwindigkeit des Magnetbandes

d a d u r c h   g e k e n n z e i c h n e t ,

daß das Signal bei der Aufzeichnung alternierend von Spur zu Spur bzw. Halbbild zu Halbbild derart über geschaltete Verzögerungsleitungen geführt wird, daß die Geometrie der Aufzeichnungsspuren auf dem Magnetband das Kriterium der Zeilendeckung aufweist und daß bei der Wiedergabe des Signals der Zeitversatz durch umgekehrt wirkende alternierend von Spur zu Spur bzw. Halbbild zu Halbbild geschaltete Verzögerungsleitungen wieder aufgehoben wird.

- 2 -

0126837

2. Verfahren nach Anspruch 1, d a d u r c h
g e k e n n z e i c h n e t , daß die geschaltete Verzögerung auf das als FM-Signal aufbereitete Luminanzsignal und das frequenzumgesetzte Chrominanzsignal wirkt.

3. Verfahren nach Anspruch 1, d a d u r c h
g e k e n n z e i c h n e t , daß die geschaltete
Verzögerung auf das Videosignal und das Chrominanzsignal
in der Basisfrequenzlage wirkt.

4. Verfahren nach Anspruch 1 , d a d u r c h
g e k e n n z e i c h n e t , daß die geschaltete
Verzögerung nur auf das Luminanzsignal wirkt.

5. Verfahren nach einem der Ansprüche 1 bis 4,
d a d u r c h g e k e n n z e i c h n e t , daß als
Verzögerungsleitungen Eimerkettenschaltungen verwendet
werden.

6. Verfahren nach einem der Ansprüche 1 bis 4,
d a d u r c h g e k e n n z e i c h n e t , daß digitale
Verzögerungsglieder verwendet werden, denen Analog-Digital-
Wandler vorgeschaltet und Digital-Analog-Wandler nachgeschaltet sind.

7. Verfahren nach einem der Ansprüche 1 bis 4,
d a d u r c h g e k e n n z e i c h n e t , daß als
Verzögerungsglieder Glasverzögerungsleitungen verwendet
werden.

0126837

FIG.1

FIG.2

FIG.3

Europäisches
Patentamt

# EUROPÄISCHER RECHERCHENBERICHT

| | EINSCHLÄGIGE DOKUMENTE | | EP 84100332.0 |
|---|---|---|---|
| **Kategorie** | **Kennzeichnung des Dokuments mit Angabe. soweit erforderlich. der maßgeblichen Teile** | **Betrifft Anspruch** | **KLASSIFIKATION DER ANMELDUNG (Int. Cl. ³)** |
| X | <u>DE - A1 - 3 111 298</u> (VICTOR)<br><br>* Zusammenfassung; Ansprüche 1-4,6; Seite 44, Zeile 27 - Seite 45, Zeile 13 *<br><br>-- | 1,5 | H 04 N 5/782 |
| X | <u>EP - A2 - 0 024 850</u> (MATSUSHITA)<br><br>* Zusammenfassung; Ansprüche 1, 2,7,8,9; Fig. 13,15,16; Seite 44, Zeilen 2-16 *<br><br>-- | 1,5 | |
| A | <u>AT - B - 357 206</u> (PHILIPS)<br><br>* Ansprüche 1-3; Seite 7, Zeile 47 - Seite 8, Zeile 14; Fig. 1,5 *<br><br>-- | 1,2,3, 5 | |
| A | <u>GB - A - 2 077 551</u> (SONY)<br><br>* Seite 1, Zeile 72 - Seite 2, Zeile 22;  Fig. 4,9,12 *<br><br>---- | 1,2 | **RECHERCHIERTE SACHGEBIETE (Int. Cl. ³)**<br><br>H 04 N 5/00<br>H 04 N 9/00<br>G 11 B 5/00 |

Der vorliegende Recherchenbericht wurde für alle Patentansprüche erstellt.

| Recherchenort | Abschlußdatum der Recherche | Prüfer |
|---|---|---|
| WIEN | 19-04-1984 | DIMITROW |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82